Europäisches Patentamt

European Patent Office

Office européen des brevets

(11) Numéro de publication: **0 272 162 B1**

# FASCICULE DE BREVET EUROPEEN

(45) Date de publication de fascicule du brevet: **25.03.92**

(51) Int. Cl.⁵: **H04J 15/00**, H04L 1/04, H04B 10/00

(21) Numéro de dépôt: **87402197.5**

(22) Date de dépôt: **02.10.87**

(54) **Dispositif de multiplexage et dispositif de démultiplexage sur fibre optique.**

(30) Priorité: **07.10.86 FR 8613942**

(43) Date de publication de la demande:
**22.06.88 Bulletin 88/25**

(45) Mention de la délivrance du brevet:
**25.03.92 Bulletin 92/13**

(84) Etats contractants désignés:
**DE GB IT NL SE**

(56) Documents cités:
**DE-A- 2 457 297**
**US-A- 2 497 859**
**US-A- 4 485 475**

**PATENT ABSTRACTS OF JAPAN, vol. 7, no. 280 (E-216)[1425], 14 décembre 1983; & JP-A-58 159 032 (NIPPON DENKI K.K.) 21-09-1983**

(73) Titulaire: **THOMSON-CSF**
**51, Esplanade du Général de Gaulle**
**F-92800 Puteaux(FR)**

(72) Inventeur: **Richin, Philippe**
**THOMSON CSF SCPI 19, avenue de Messine**
**F-75008 Paris(FR)**
Inventeur: **d'Auria, Luigi**
**THOMSON CSF SCPI 19, avenue de Messine**
**F-75008 Paris(FR)**
Inventeur: **Maillot, Philippe**
**THOMSON CSF SCPI 19, avenue de Messine**
**F-75008 Paris(FR)**
Inventeur: **Chevalier, Guy**
**THOMSON CSF SCPI 19, avenue de Messine**
**F-75008 Paris(FR)**

(74) Mandataire: **Courtellemont, Alain et al**
**THOMSON-CSF SCPI**
**F-92045 PARIS LA DEFENSE CEDEX 67(FR)**

## Description

La présente invention concerne la transmission, sur une seule fibre optique, de plusieurs canaux indépendants.

Il est connu de transmettre, sur une même fibre optique, plusieurs canaux indépendants. Pour cela, grâce à des multiplexeurs optiques très sélectifs, des bandes spectrales étroites et distinctes sont découpées dans le signal optique d'autant de sources à large bande, commandées chacune par un signal indépendant, qu'il y a de canaux ; les bandes spectrales sont multiplexées pour être transmises sur une fibre unique. A la réception, un démultiplexeur permet de séparer les différents canaux.

Il existe, pour effectuer ces transmissions, des composants capables de fonctionner dans des gammes de température très larges, par exemple de -55 à +125°C. Malheureusement les caractéristiques des sources électroluminescentes évoluent avec la température, c'est ainsi que lorsque la température augmente la puissance émise diminue et que la valeur de la longueur d'onde au maximum d'amplitude du spectre augmente. Il en résulte une variation importante de la quantité d'énergie qui est transmises dans chacune des bandes étroites et distinctes, dont il a été question plus avant, et il en résulte également des effets de diaphonie entre les canaux ; cela peut rendre impossible la transmission avec certains canaux.

La présente invention a pour but de réduire ces inconvénients afin de rendre possible, même si de fortes variations de température sont à envisager, la transmission sur une fibre optique unique de plusieurs canaux indépendants provenant de sources à spectre large.

La présente invention a pour objet un dispositif de multiplexage, tel que défini à la revendication 1, où chaque canal est dédoublé et où le choix des deux bandes de fréquences étroites d'un canal dédoublé est fait de manière que, au total des deux bandes, le signal reçu soit utilisable malgré les variations de température. La présente invention a également pour objet un dispositif de démultiplexage tel que défini à la revendication 3 et donc apte à coopérer avec un dispositif de multiplexage tel que défini à - la revendication 1.

La présente invention sera mieux comprise et d'autres caractéristiques apparaîtront à l'aide de la description ci-après et des figures s'y rapportant qui représentent :

- la figure 1, un dispositif de multiplexage selon l'art antérieur,
- la figure 2, un schéma relatif à un élément des figures 1 et 4,
- la figure 3, des courbes relatives à la figure 1,
- la figure 4 un dispositif de multiplexage et un dispositif de démultiplexage selon l'invention,
- la figure 5 des courbes relatives à la figure 4,
- les figures 6 à 9 des schémas de différentes possibilités de réalisation du dispositif de multiplexage selon la figure 4.

Sur les différentes figures les éléments correspondants sont désignés par les mêmes repères.

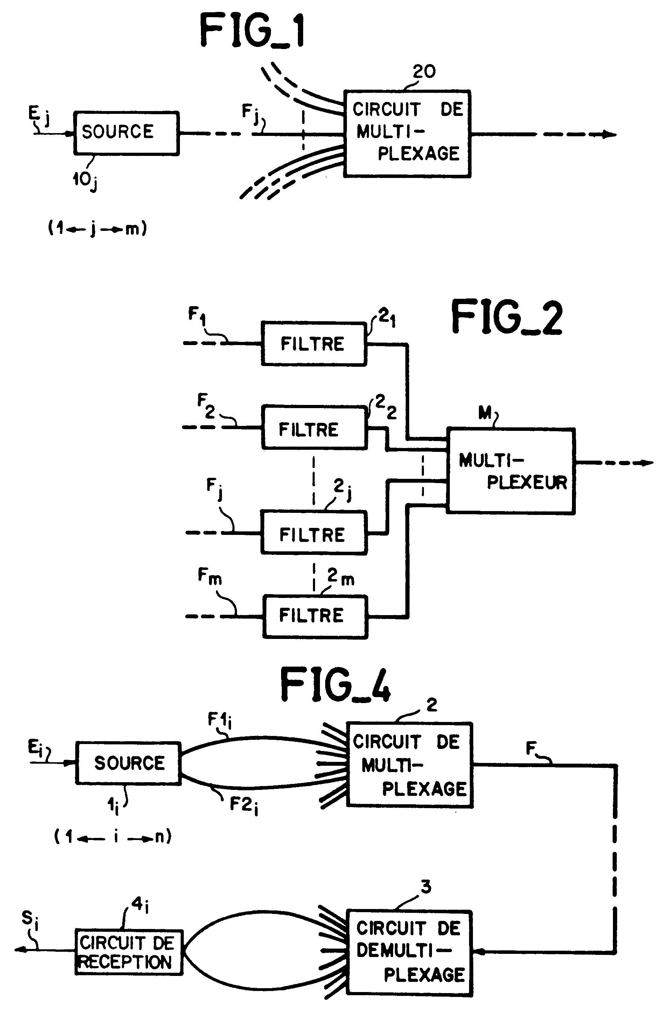

La figure 1 représente un dispositif de multiplexage selon l'art connu, tel qu'il est possible d'en réaliser avec m sources électroluminescentes distinctes, à spectre large, $10_j$ (j : nombre entier variant de 1 à m) commandées par des signaux électriques de modulation $E_j$ ; ces sources sont reliées respectivement à m entrées d'un circuit de multiplexage optique, 20, par des fibres optiques $F_j$. Ceci est possible avec les circuits de multiplexage à réseau de diffraction, disponible dans le commerce. Ces circuits de multiplexage comportent principalement un réseau de diffraction, un bloc de silice et un miroir concave.

La figure 2 est une représentation fonctionnelle du circuit 20 de la figure 1. Cette figure montre que le circuit de multiplexage à réseau de diffraction se comporte comme un ensemble de filtres passe-bandes à bandes étroites et distinctes, $2_1$ à $2_m$, reliés aux entrées d'un multiplexeur, M ; les entrées des filtres $2_1$ à $2_m$ constituent les entrées du circuit de multiplexage sur lesquelles aboutissent les fibres optiques $F_j$ provenant des sources ; la sortie du multiplexeur M constitue la sortie du circuit de multiplexage.

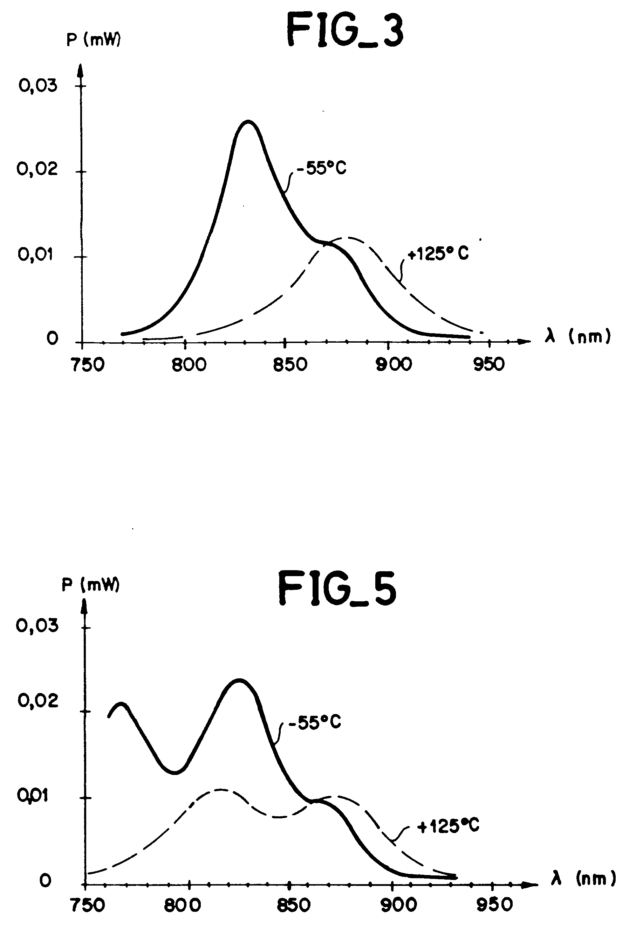

La figure 3 montre, pour une même source $10_j$ selon la figure 1, et pour un même signal électrique de modulation, $E_j$, appliqué à cette source, les puissances correspondantes, disponibles à la sortie du circuit de multiplexage 20 lorsque la température ambiante est respectivement de -55°C et de +125°C ; les puissances sont données en fonction de la longueur d'onde. Les caractéristiques de la source électroluminescente évoluent avec la température et, lorsque la température augmente, la puissance disponible à la sortie du circuit de multiplexage diminue en même temps que le maximum du spectre se déplace vers les grandes longueurs d'onde. Ce phénomène peut rendre impossible une liaison par fibre optique dans certaines conditions de température ; c'est ainsi que, pour une réception sur une longueur d'onde de 835 nanomètres, la puissance disponible passe sensiblement de 0,025 mW pour -55°C à 0,0025 mW pour +125°C soit une perte de 10 décibels sur la liaison.

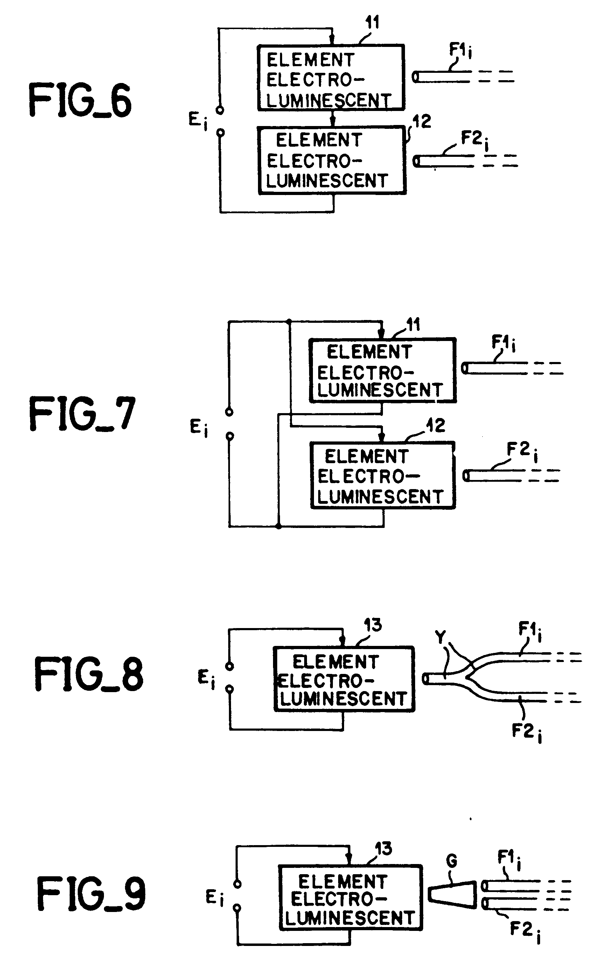

La figure 4 est le schéma de réalisation d'une transmission simultanée sur une seule fibre optique, F, de n canaux indépendants provenant respectivement de n sources électroluminescentes à spectre large, $1_i$ (i : nombre entier variant de 1 à

2

n), commandées par n signaux électriques de modulation, distincts, $E_i$. La fibre F constitue la liaison entre, d'un côté, la sortie d'un circuit de multiplexage 2, semblable au circuit 20 des figures 1 et 2 (avec 2.n = m filtres d'entrée utilisés), et, de l'autre côté, l'entrée d'un circuit de démultiplexage 3, identique au circuit 2 mais utilisé dans le sens opposé du point de vue de la transmission optique, le multiplexeur M de la figure 2 se comportant alors en démultiplexeur.

Chaque source $1_i$ fournit son signal au circuit de multiplexage, 2, par deux fibres $F1_i$, $F2_i$ ; différentes façons de réaliser les sources $1_i$ seront décrites à l'aide des figures 6 à 9. Les deux fibres provenant d'une même source $1_i$ aboutissent sur deux entrées distinctes du circuit de multiplexage 2 et donc sur deux filtres d'entrée différents. L'écart entre les fréquences centrales de ces deux filtres est choisi de telle sorte que, pour une température ambiante variant de -55°C à +125°C, au moins l'un des deux filtres reste en regard d'une partie du spectre permettant d'effectuer la liaison lorsque la puissance transmise par l'autre filtre est quasi nulle. Pour chaque liaison à partir d'une source, l'idéal est que, lorsque, à une extrémité de la bande des températures d'utilisation, la puissance transmise par l'un des deux filtres est quasi nulle, celle transmise par l'autre filtre passe par son maximum ; mais compte tenu des autres liaisons à réaliser et des diverses autres conditions de réalisation, le choix des filtres peut être fait différemment dans la mesure où il assure un niveau d'énergie suffisant à la réception.

Dans le circuit de démultiplexage 3, identique au circuit 2, mais utilisé en sens inverse comme il a été indiqué, les parties de l'énergie provenant d'une source $1_i$ donnée et transmises par deux filtres d'entrée du circuit 2, sortiront respectivement par les deux filtres de sortie du circuit 3 qui sont identiques aux filtres susnommés du circuit 2. Chacun de ces deux filtres de sortie est relié, par fibre optique, à un circuit de réception, $4_i$, qui fournit un signal électrique $S_i$ correspondant au signal $E_i$ appliqué comme signal de modulation de la source $1_i$. Les circuits de réception, tels que $4_i$, sont équipés de photodiodes PIN.

Il est à noter que, pour éviter des problèmes de déphasage entre les deux signaux reçus par le circuit de réception $4_i$, les trajets qu'empruntent ces deux signaux sont conçus pour être de longueurs égales entre la source $1_i$ et le circuit de réception $4_i$.

Dans l'exemple de réalisation décrit les circuits de multiplexage, 2, et de démultiplexage, 3, à réseau de diffraction présentent les caractéristiques suivantes

1°) fibres d'entrée et de sortie diamètre du coeur : 100 microns diamètre de la gaine optique : 140 microns ouverture numérique : 0,25

2°) réseau 330 traits par millimètre

3) système optique miroir de 50 mm de distance focale

de tels circuits de multiplexage-démultiplexage, qui présentent une largeur de filtre à la base de 20 nanomètres, sont, par exemple, proposés par la société JOBIN YVON.

La figure 5 montre, pour une même source $1_i$ (figure 4) et pour un même signal $E_i$ appliqué à cette source, les puissances correspondantes disponibles à la sortie du circuit de multiplexage, c'est-à-dire la somme des puissances provenant des deux filtres d'entrée relatifs à la source $1_i$ considérée ; les courbes sont relevées respectivement à -55°C et +125°C en faisant varier les fréquences centrales des deux filtres mais en maintenant un écart de 60 nanomètres entre ces fréquences centrales ; les valeurs des puissances relevées pour une position des deux filtres d'entrée sont portées sur la courbe en face de la valeur de la fréquence centrale la plus basse, c'est ainsi qu'à -55°C, avec des filtres centrés sur 780 et 840 nanomètres correspond un point d'abscisse 780 nanomètres et d'ordonnée 0,016 milliwatts.

Toujours dans l'exemple de réalisation décrit une quadruple liaison a été réalisée avec un centrage des filtres sur 815 et 875 mm pour la première voie, sur 830 et 890 mm pour la deuxième voie, sur 845 et 905 nm pour la troisième voie et sur 860 et 920 pour la quatrième voie ; ce choix des fréquences de centrage des deux filtres de chaque liaison a été fait de manière que, dans la limite des températures de fonctionnement du dispositif, c'est-à-dire -55 et +125°C, la partie du spectre du signal transmis par au moins un de ces deux filtres ait une énergie suffisante pour permettre sa transmission et sa réception. Les courbes de la figure 5 montrent qu'entre -55°C et +125°C le rapport des puissances disponibles sur la sortie du circuit de multiplexage 2 de la figure 4, est de 3 dB pour la première voie, de 4,2 dB pour la deuxième voie, de 2,7 dB pour la troisième voie et de 0dB pour la quatrième voie.

Les figures 6 à 9 montrent différentes possibilités de réalisation de la source $1_i$ de la figure 4.

La figure 6 représente deux éléments électroluminescents 11, 12, commandés en série par le même signal électrique de modulation, $E_i$, et couplés respectivement aux deux fibres $F1_i$ et $F2_i$.

La source de la figure 7 est également constituée de deux éléments électroluminescents, 11, 12, couplés respectivement aux deux fibres $F1_i$ et $F2_i$, mais dans cette réalisation les éléments au lieu d'être commandés en série par le signal $E_i$ sont commandés en parallèle.

La source de la figure 8 comporte un seul élément électroluminescent 13 associé à un coupleur optique en Y, désigné par la lettre Y sur la figure. L'élément 13 est commandé par le signal de modulation $E_i$ et le coupleur en Y assure le couplage optique de l'élément 13 avec les fibres $F1_i$ et $F2_i$.

La figure 9 ne se distingue de la figure 8 que par le remplacement du coupleur, Y, par un dispositif de couplage, G, constitué par une fibre en tronc de cône dont la face plane de plus petite surface est en regard de l'élément électroluminescent 13 et de diamètre voisin et dont l'autre face est en regard des extrémités des fibres $F1_i$ et $F2_i$, avec un diamètre voisin de la somme des diamètres des fibres $F1_i$ $F2_i$.

Les réalisations du circuit de réception $4_i$ de la figure 4 peuvent être analogues aux réalisations de la source $1_i$ selon les figures 6 à 9 ; pour avoir des schémas de circuits de réception il suffit de remplacer, dans les figures 6 à 9, les éléments électroluminescents par des récepteurs et de considérer un sens de transmission allant de la droite vers la gauche des figures.

La présente invention n'est pas limitée aux exemples décrits, c'est ainsi, en particulier, que le nombre de voies à transmettre sur une même fibre et les fréquences centrales des deux filtres de chaque voie peuvent être très différents de ce qui a été décrit, compte tenu principalement de la gamme de température à couvrir, des composants disponibles et des buts poursuivis. De même les circuits de multiplexage et de démultiplexage à réseau de diffraction peuvent, en fonction des composants disponibles, être remplacés par des circuits d'une autre technologie avec, éventuellement, dissociation entre plusieurs composants des fonctions de filtrage et de multiplexage ou de démultiplexage.

**Revendications**

1. Dispositif de multiplexage sur une seule fibre optique de transmission (F), comportant n (n : entier positif) sources électroluminescentes ($1_i$) destinées à être commandées respectivement par n signaux de modulation distincts ($E_i$), des fibres d'entrées ($F1_i$, $F2_i$) ayant chacune leur première extrémité couplée à l'une des sources et un circuit de multiplexage (2) avec des filtres d'entrée ($2_j$), à bandes passantes étroites et distinctes, couplés chacun à la seconde extrémité d'une des fibres d'entrée, caractérisé en ce que les fibres d'entrée ($F1_i$, $F2_i$) et les filtres d'entrée ($2_j$) sont chacun au nombre de 2.n, en ce que les 2.n fibres d'entrée sont reliées respectivement aux 2.n filtres d'entrée et forment n paires de fibres d'entrée qui sont couplées respectivement aux n sources ($1_i$) et en ce que les deux filtres reliés par une même paire de fibres d'entrée ($F1_i$, $F2_i$) à l'une des sources ($1i$) ont des bandes passantes choisies de manière que, dans les limites de température de fonctionnement du dispositif, au moins un des filtres reste en regard d'une partie du spectre du signal fourni par la source considérée ($1i$) présentant un niveau d'énergie suffisant pour permettre la transmission et la réception du signal fourni.

2. Dispositif de multiplexage selon la revendication 1, caractérisé en ce que le circuit de multiplexage (2) est du type à réseau de diffraction.

3. Dispositif de démultiplexage sur fibre optique comportant un circuit de démultiplexage (3) avec des filtres de sortie à bandes passantes étroites et distinctes et des circuits de réception ($4_i$), caractérisé en ce que les circuits de réception sont au nombre de n, en ce que les filtres sont au moins au nombre de 2.n, en ce que chacun des n circuits de réception est couplé à au moins 2 des 2.n filtres, et en ce que, dans les limites de fonctionnement du dispositif et quel que soit le circuit de réception considéré, les filtres auxquels ce circuit de réception considéré est couplé ont des bandes passantes distinctes, choisies en fonction des signaux à recevoir par le circuit de réception considéré, de telle sorte qu'au moins l'un des filtres, auxquels le circuit de réception considéré est couplé, reste en regard d'une partie du spectre des signaux à recevoir par le circuit de réception considéré.

4. Dispositif de démultiplexage sur fibre optique, selon la revendication 3, caractérisé en ce que le circuit de démultiplexage (3) est du type à réseau de diffraction.

**Claims**

1. A multiplexing device for a single optical transmission fiber (F), comprising n (n being a positive whole number) electroluminescent sources ($1_i$,) to be respectively controlled by n distinct modulation signals ($E_i$), input fibers ($F1_i$ and $F2_i$) each having their first end coupled with one of the sources and a multiplexing circuit (2) with input filters ($2_j$), with narrow and distinct pass bands, each coupled with the second end of one of the input fibers, characterized in that the input fibers ($F1_i$ and $F2_i$) and the input filters ($2_j$) are each present in a number of 2.n, in that the 2.n input fibers are respectively connected with the 2.n input filters and constitute n pairs of input fibers which are respectively coupled with the n sources ($1_i$) and in that the two filters connected by the same pair of input fibers ($F1_i$ and $F2_i$) with one of the sources (1i) have pass bands selected in such a manner that, within the temperature limits of operation of the device, at least one of the filters remain in alignment with a part of the spectrum of the signal supplied by the source considered (1i) presenting a sufficient energy level in order to permit the transmission and the reception of the supplied signal.

2. The multiplexing device as claimed in claim 1, characterized in that the multiplexing circuit (2) is of the diffraction grating type.

3. A demultiplexing circuit for a single optical fiber comprising a demultiplexing circuit (3) with filters having narrow and distinct pass bands and receiving circuits ($4_i$), characterized in that the receiving circuits are present in a number of n, in that the filters are present in a number of at least $2 \cdot n$, in that each of the n receiving circuits is coupled with at least 2 of the $2 \cdot n$ filters, and in that within the limits of functioning of the device and whatever the receiving circuit considered, the filters with which the said receiving circuit is coupled have distinct pass bands selected as a function of the signal to be received in such a manner that at least one of the filters with which the receiving circuit considered is coupled, remain in alignment with a part signals to be received by the receiving circuit considered.

4. The demultiplexing device for an optical fiber as claimed in claim 3, characterized in that the demultiplexing circuit (3) is of the diffraction grating type.

**Patentansprüche**

1. Multiplexeinrichtung für eine einzige Übertragungs-Lichtleitfaser (F), mit n (n positive ganze Zahl) Elektrolumineszenzquellen ($1_i$), die jeweils dazu vorgesehen sind, von n verschiedenen Modulationssignalen ($E_i$) gesteuert zu werden, Eingangsfasern ($F1_i$, $F2_i$), die jeweils mit ihrem ersten Ende mit einer der Quellen gekoppelt sind, und einer Multiplexschaltung (2) mit Eingangsfiltern ($2_j$) mit schmalen und verschiedenen Durchlaßbändern, die jeweils mit dem zweiten Ende einer der Eingangsfasern gekoppelt sind, dadurch gekennzeichnet, daß die Eingangsfasern ($F1_i$, $F2_i$) und die Eingangsfilter ($2_j$) jeweils in einer Anzahl von zwei $2 \cdot n$ vorgesehen sind, daß die $2 \cdot n$ Eingangsfasern jeweils mit den $2 \cdot n$ Eingangsfiltern verbunden sind und n Paare von Eingangsfasern bilden, die jeweils mit den n Quellen ($1_i$) gekoppelt sind, und daß die zwei durch ein bestimmtes Paar von Eingangsfasern ($F1_i$, $F2_i$) mit einer der Quellen ($1_i$) verbundenen Filter Durchlaßbänder besitzen, die so gewählt sind, daß in den Grenzen der Betriebstemperatur der Einrichtung wenigstens eines der Filter gegenüber einem Teil des Spektrums des von der betrachteten Quelle ($1_i$) gelieferten Signals verbleibt, dessen Energiepegel ausreicht, um die Übertragung und den Empfang des gelieferten Signals zu ermöglichen.

2. Multiplexeinrichtung gemäß Anspruch 1, dadurch gekennzeichnet, daß die Multiplexschaltung (2) von einer Bauart mit Beugungsgitter ist.

3. Demultiplexeinrichtung für Lichtleitfaser, mit einer Demultiplexschaltung (3) mit Ausgangsfiltern, die schmale und verschiedene Durchlaßbänder besitzen, und Empfangsschaltungen ($4_i$), dadurch gekennzeichnet, daß die Empfangsschaltungen in einer Anzahl n vorgesehen sind, daß die Filter wenigstens in einer Anzahl $2 \cdot n$ vorgesehen sind, daß jede der n Empfangsschaltungen mit wenigstens zwei der $2 \cdot n$ Filter gekoppelt ist und daß innerhalb der Betriebsgrenzen der Einrichtung und unabhängig von der betrachteten Empfangsschaltung die Filter, mit denen diese betrachtete Empfangsschaltung gekoppelt ist, verschiedene Durchlaßbänder besitzen, die in Abhängigkeit von den von der betrachteten Empfangsschaltung zu empfangenden Signalen gewählt werden, derart, daß wenigstens eines der Filter, mit denen die betrachtete Empfangsschaltung gekoppelt ist, gegenüber einem Teil des Spektrums der von der betrachteten Empfangsschaltung zu empfangenden Signale verbleibt.

4. Demultiplexeinrichtung für Lichtleitfaser gemäß Anspruch 3, dadurch gekennzeichnet, daß die Demultiplexschaltung (3) von einer Bauart mit Beugungsgitter ist.

EP 0 272 162 B1

# FIG_1

E j → SOURCE ⟶ F j ⟶ CIRCUIT DE MULTI-PLEXAGE ⟶

20

10 j

(1 ← j → m)

# FIG_2

F_1 → FILTRE — 2_1
F_2 → FILTRE — 2_2
F_j → FILTRE — 2_j
F_m → FILTRE — 2_m
M → MULTI-PLEXEUR ⟶

# FIG_4

E_i → SOURCE ⟶ F1_i / F2_i ⟶ CIRCUIT DE MULTI-PLEXAGE ⟶ F

2

1_i

(1 ← i → n)

S_i ← CIRCUIT DE RECEPTION ⟵ CIRCUIT DE DEMULTI-PLEXAGE

4_i

3

# FIG_3

# FIG_5

FIG_6

ELEMENT ELECTRO-LUMINESCENT 11

$E_i$

$F1_i$

ELEMENT ELECTRO-LUMINESCENT 12

$F2_i$

FIG_7

ELEMENT ELECTRO-LUMINESCENT 11

$E_i$

$F1_i$

ELEMENT ELECTRO-LUMINESCENT 12

$F2_i$

FIG_8

ELEMENT ELECTRO-LUMINESCENT 13

$E_i$

Y

$F1_i$

$F2_i$

FIG_9

ELEMENT ELECTRO-LUMINESCENT 13

$E_i$

G

$F1_i$

$F2_i$